(19) Europäisches Patentamt
European Patent Office
Office européen des brevets

(11) **EP 0 625 168 B1**

(12) **EUROPEAN PATENT SPECIFICATION**

(45) Date of publication and mention
of the grant of the patent:
**03.03.1999 Bulletin 1999/09**

(21) Application number: **93901184.7**

(22) Date of filing: **17.12.1992**

(51) Int Cl.⁶: **C08J 9/08**, C08J 9/10,
C08J 9/12

(86) International application number:
**PCT/US92/10932**

(87) International publication number:
**WO 93/15132 (05.08.1993 Gazette 1993/19)**

(54) **A PROCESS FOR MAKING A DIMENSIONALLY-STABLE POLYPROPYLENE FOAM EXPANDED WITH INORGANIC BLOWING AGENTS**

VERFAHREN ZUR HERSTELLUNG EINES DURCH ANORGANISCHE TREIBMITTEL EXPANDIERTEN FORMSTABILEN POLYPROPYLENSCHAUMSTOFFES

PROCEDE DE FABRICATION D'UNE MOUSSE DE POLYPROPYLENE A STABILITE DIMENSIONNELLE, EXPANSEE A L'AIDE D'AGENTS GONFLANTS INORGANIQUES

(84) Designated Contracting States:
**AT BE CH DE DK ES FR GB GR IE IT LI LU NL SE**

(30) Priority: **04.02.1992 US 831123**

(43) Date of publication of application:
**23.11.1994 Bulletin 1994/47**

(73) Proprietor: **THE DOW CHEMICAL COMPANY**
**Midland, Michigan 48674 (US)**

(72) Inventor: **PARK, Chung, P.**
**Pickerington, OH 43147 (US)**

(74) Representative: **Casalonga, Axel et al**
**BUREAU D.A. CASALONGA - JOSSE**
**Morassistrasse 8**
**80469 München (DE)**

(56) References cited:
**GB-A- 989 521**     **US-A- 3 407 151**
**US-A- 4 506 037**

**Description**

This invention relates to a process for making a low density, dimensionally-stable, extruded propylene polymer foam blown with a blowing agent comprising partly or entirely one or more inorganic blowing agents. The foam offers excellent cushioning properties.

Propylene polymer foams are known in the art, and have been found useful in many applications such as seen in U.S. Patent No. 3,481,455, 3,871,897, 3,932,569, 4,522,955, and 4,832,770. Such foams have been made with a wide variety of organic and inorganic blowing agents.

Given current environmental concerns over the use of organic blowing agents, it would be desirable to have an extruded propylene polymer foam blown partly or solely with inorganic blowing agents. It would be further desirable to have such a dimensionally-stable, low density foam (for example, 10 to 70 kilograms per cubic meter) for use in cushioning applications. It would also be desirable to have such a foam that is partially open-cell (for example, at least 5 percent) since open-cell foams are easier to produce and dimensionally more stable than corresponding closed-cell foams.

GB-A-0 989 521, US-A-3 407 151 and US-AS 506 037 disclose a process for making a polypropylene foam by incorporating an inorganic blowing agent into the polypropylene, which is then heated and extruded.

According to the present invention, there is provided a process for making a dimensionally-stable, extruded propylene polymer foam having a density of from 10 to 150 kilograms per cubic meter the process comprising:

a) heating a propylene polymer material comprising greater than 50 percent by weight propylene monomeric units to form a melt polymer material;

b) incorporating into the melt polymer material a blowing agent containing at least 15 percent by weight of one or more inorganic blowing agents to form a foamable gel;

c) cooling the foamable gel to an optimum foaming temperature; and

d) extruding the foamable gel through a die to form the foam, in the form of a plank and having an average cell wall thickness of less than 35 micrometers.

Suitable propylene polymer materials include propylene homopolymers (polypropylene) and copolymers of propylene and copolymerizable ethylenically unsaturated comonomers. The propylene polymer material may further include non-propylenic polymers. The propylene polymer material may be comprised solely of one or more propylene homopolymers, one or more propylene copolymers, a blend of one or more of each of propylene homopolymers and copolymers, or blends of any of the foregoing with a non-propylenic polymer. Regardless of composition, the propylene polymer material comprises greater than 50 and preferably at least 80 weight percent of propylene monomeric units.

Suitable monoethylenically unsaturated comonomers include olefins, vinylacetate, methylacrylate, ethylacrylate, methyl methacrylate, acrylic acid, itaconic acid, maleic acid, maleic anhydride. The propylene copolymer preferably comprises 20 percent or less by weight of the ethylenically unsaturated comonomer.

Suitable non-propylenic polymers incorporatable in the propylene polymer material include high, medium, low density, and linear low density polyethylenes, polybutene-1, ethylene-acrylic acid copolymer, ethylene-vinyl acetate copolymer, ethylene-propylene rubber, styrene-butadiene rubber, ethylene-ethyl acrylate copolymer, and ionomer.

Particularly useful propylene copolymers are those copolymers of propylene and one or more non-propylenic olefins. Propylene copolymers include random and block copolymers of propylene and an olefin selected from the group consisting of ethylene, $C_4$-$C_{10}$ 1-olefins, and $C_4$-$C_{10}$ dienes. Propylene copolymers also include random terpolymers of propylene and 1-olefins selected from the group consisting of ethylene and $C_4$-$C_8$ 1-olefins. In terpolymers having both ethylene and C4-C8 1-olefins, the ethylene content is preferably 20 percent or less by weight. The $C_4$-$C_{10}$ 1-olefins include the linear and branched $C_4$-$C_{10}$ 1-olefins such as, for example, 1-butene, isobutylene, 1-pentene, 3-methyl-1-butene, 1-hexene, 3,4-dimethyl-1-butene, 1-heptene, and 3-methyl-1-hexene. Examples of $C_4$-$C_{10}$ dienes include 1,3-butadiene, 1,4-pentadiene, isoprene, 1,5-hexadiene, 2,3-dimethyl-1,3-hexadiene.

Also, as used herein, the propylene polymer material has a melt flow rate of between 0.05 and 50 and preferably between 0.1 and 10 according to ASTM D1238 Condition L.

The preferred propylene polymer resins for the present invention are those polypropylene resins which are branched or lightly cross-linked polymer materials. Branching (or light cross-linking) may be obtained by those methods generally known in the art, such as chemical or irradiation branching/light cross-linking. One such resin which is prepared as a branched/lightly cross-linked polypropylene resin prior to using the polypropylene resin to prepare a finished polypropylene resin product and the method of preparing such a polypropylene resin is described in U.S. Patent No. 4,916,198. Another method to prepare branched/lightly cross-linked polypropylene resin is to introduce chemical compounds into the extruder, along with a polypropylene resin and allow the branching/lightly cross-linking reaction to take place in the extruder. U.S. Patent No. 4,714,716 illustrates this method.

Suitable branching/crosslinking agents for use in extrusion reactions have been found to include azido and vinyl functional silanes, organic peroxides and multifunctional vinyl monomers.

It is also possible to add various additives such as inorganic fillers, pigments, antioxidants, acid scavengers, ultraviolet absorbers, flame retardants, processing aids, and extrusion aids.

In addition, a nucleating agent may be added in order to control the size of foam cells. Preferred nucleating agents include inorganic substances such as calcium carbonate, talc, clay, titanium oxide, silica, barium sulfate, diatomaceous earth, and mixtures of citric acid and sodium bicarbonate. The amount of nucleating agent employed may range from 0.01 to 5 parts by weight per hundred parts by weight of a polymer resin. The preferred range is from 0.1 to 3 parts by weight.

Suitable inorganic blowing agents useful in making the foams of the present invention include carbon dioxide, nitrogen, argon, water, air, and helium. The blowing agent will be comprised of at least 15 percent by weight, preferably at least 50 percent by weight, more preferably at least 95 percent by weight, and most preferably entirely of one or more of these inorganic agents. Preferred blowing agents include carbon dioxide, nitrogen, and water. Most preferred blowing agents are carbon dioxide and a mixture of carbon dioxide and water. The balance of the blowing agent may comprise one or more chemical or volatile organic blowing agents. Preferred blowing agents, however, are free of volatile organic agents and chemical blowing agents. Organic blowing agents include aliphatic hydrocarbons having 1-9 carbon atoms and halogenated aliphatic hydrocarbons, having 1-4 carbon atoms. Aliphatic hydrocarbons include methane, ethane, propane, n-butane, isobutane, n-pentane, isopentane, neopentane. Among halogenated hydrocarbons, fluorinated hydrocarbons are preferred. Examples of fluorinated hydrocarbon include methyl fluoride, perfluoromethane, ethyl fluoride, 1,1-difluoroethane, 1,1,1-trifluoroethane (HFC-143a), 1,1,1,2-tetrafluoro-ethane (HFC-134a), pentafluoroethane, perfluoroethane, 2,2-difluoropropane, 1,1,1-trifluoropropane, perfluoropropane, perfluorobutane, perfluorocyclobutane. Partially halogenated chlorocarbons and chlorofluorocarbons for use in this invention include methyl chloride, methylene chloride, ethyl chloride, 1,1,1-trichloroethane, 1,1-dichloro-1-fluoroethane (HCFC-141b), 1-chloro-1,1-difluoroethane (HCFC-142b), 1,1-dichloro-2,2,2-trifluoroethane (HCFC-123) and 1-chloro-1,2,2,2-tetrafluoroethane (HCFC-124). Fully halogenated chlorofluorocarbons include trichloromonofluoromethane (CFC-11), dichlorodifluoromethane (CFC-12), trichlorotrifluoroethane (CFC-113), dichlorotetrafluoroethane (CFC-114), chloroheptafluoropropane, and dichlorohexafluoropropane. Fully halogenated chlorofluorocarbons are not preferred due to their ozone depletion potential. Chemical blowing agents include azodicarbonamide, azodiisobutyronitrile, benzenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, and trihydrazino triazine.

The amount of blowing agent incorporated into the polymer melt to make a foam-forming polymer gel is from 0.2 to 5.0, preferably from 0.5 to 3.0, and most preferably from 1.0 to 2.50 moles per kilogram of polymer.

The present foam may be closed cell or open cell. Preferably, the present foam is from 5 to 100 and most preferably from 20 to 70 percent open cell according to ASTM D2856-A. Some open cell content is preferred in the present foam because an open cell foam is more dimensionally stable than a corresponding closed cell foam when prepared with fast permeating blowing agents such as carbon dioxide and water. The open cell foams prepared from the propylene polymer provide a high degree of resiliency most normally only seen in closed cell foams.

The present foam has the density of from 10 to 150 and most preferably from 10 to 70 kilograms per cubic meter. The foam has an average cell size of from 0.1 to 5.0 and preferably from 0.2 to 1.5 millimeters according to ASTM D3576.

The present foam has a cell wall thickness of less than 35, preferably less than 25, and most preferably less than 15 micrometers according to the formula below. It is believed that blowing agents diffuse out more rapidly from thinner cells walls than thicker ones providing more effective quenching and timely stiffening of the cell walls. As a result, the expanding bubbles become more effectively stabilized providing a low density foam having greater resiliency. The thickness of cell wall may be calculated approximately from the foam density and cell size by the use of following equation (1):

$$t = 0.46 \ D/B \tag{1}$$

where t is the thickness of cell walls in micrometers ($\mu$): D is cell size in micrometers and: B, the expansion ratio of the cellular body. Since the expansion ratio, B, can be equated the ratio of the polymer density ($\rho_p$) to foam density ($\rho_f$), the thickness of cell walls may be represented by equation (2):

$$t = (0.46/\rho_p)\rho_f D \qquad (2)$$

For example, for polypropylene having 900 kg/m3 density to have cell wall thickness less than or equal to 35 micrometers:

$$(\rho_f)(D) \leqq 68.5 \ (Kg/m^3 \bullet mm) \qquad (3)$$

Equation 3 indicates that, for example, a 70 Kg/m3 density foam must have cell size no greater than 0.98mm. In order to meet the more preferred criterion $t \leqq 15$ micrometers, a 70 kg/m3 density foam must have a cell size no greater than 0.42 mm.

The present foams are made in the form of a plank foam having a major dimension in cross-section of at least 5 centimeters or a cross-sectional area of at least 10 square centimeters.

The present propylene polymer foam is generally prepared by heating a propylene polymer material to form a plasticized or melt polymer material, incorporating therein a blowing agent to form a foamable gel, and extruding the gel through a die to form the foam product. The blowing agent may be incorporated or mixed into the plastic melt by any means known in the art such as with an extruder, mixer, or blender. Prior to mixing with the blowing agent, the plastic material is heated to a temperature at or above the glass transition temperature or the melting point of the plastic material. The blowing agent is mixed with the plastic melt at an elevated pressure sufficient to prevent substantial expansion of the melt and to generally disperse the blowing agent homogeneously within the melt. Optionally, a nucleator is blended in the polymer melt. The feeding rate of blowing agent and nucleator are adjusted to achieve a relatively low density foam and small cell size, which results in a foam having thin cell walls. After incorporation of the blowing agent, the foamable gel is typically cooled to a lower temperature to optimize physical characteristics of the foam product. The gel is then extruded through a die of desired shape to a zone of lower pressure to form the foam product.

Other suitable processes for making the present foam are the coalesced foam process as described in U.S. Patent No. 4,824,720 and the accumulating extrusion process described in U.S. Patent No. 4,323,528.

U.S. Patent No. 4,824,720 describes the coalesced (or strand) foam process. This patent describes a method for providing a closed cell foam structure comprising a plurality of coalesced extruded strands or profiles by extrusion foaming of a molten thermoplastic composition utilizing a die containing a multiplicity of orifices. The orifices are arranged such that the contact between adjacent streams of the molten extrudate occurs during the foaming process and the contacting surfaces adhere to one another with sufficient adhesion to result in a unitary structure. The individual strands of coalesced polyolefin foam should remain adhered into a unitary structure to prevent strand delamination under stresses encountered in preparing, shaping, and using the foam.

U.S. Patent No. 4,323,528 describes an accumulating extrusion process. In this accumulating extrusion process low density, elongated cellular bodies having large lateral cross-sectional areas are prepared by: 1) forming, under pressure, a mixture of a thermoplastic polymer and a blowing agent, with the mixture having a temperature at which the viscosity of the mixture is sufficient to retain the blowing agent when the mixture is allowed to expand; 2) extruding the mixture into a holding zone maintained at a temperature and pressure which does not allow the mixture to foam, the holding zone having an outlet die defining an orifice opening into a zone of lower pressure at which the mixture foams, and an openable gate closing the die orifice; 3) periodically opening the gate; 4) substantially concurrently applying mechanical pressure by a movable ram on the mixture to eject the mixture from the holding zone through the die orifice into the zone of lower pressure, at a rate greater than that at which substantial foaming in the die orifice occurs and less than that at which substantial irregularities in cross-sectional area or shape occurs; and 5) permitting the ejected mixture to expand unrestrained in at least one dimension to produce an elongated thermoplastic cellular body.

The present foams offer excellent cushioning properties and resiliency. The present foams are suitable for cushion packaging since the foams have adequate impact absorption properties and resilience. The foam products mitigate impact during multiple drops. The more closed cell foams function better than the more open cell foams, but the open cell foams absorb dynamic impacts surprisingly well. In addition, the open cell foams can be used for sound absorption. The foams can be used for thermal insulation as well.

The present foams have satisfactory dimensional stability even though the foams are expanded with fast permeating blowing agents. Preferred foams recover $\geqq 80$ percent of initial volume within a month with initial volume being measured within 30 seconds after extrusion.

The following are examples of the present invention, and are not to be construed as limiting. Unless otherwise indicated, all percentages, parts, or proportions are by weight.

Example 1

An open-cell propylene copolymer foam was prepared according to the process of the present invention.

A Himont HMS (high melt strength) 2/98 ethylene/propylene random copolymer (polymer) with a melt flow rate (MFR) of 0.47 (ASTM D 1238 Condition L) was employed. Granular copolymer and an antioxidant concentrate were fed to an extruder at a total rate of approximately 113.4 kilograms/hour (kg/hr) (250 pounds/hour) (lbs/hr). The antioxidant concentrate contained 8.4 percent each of a hindered phenol-type antioxidant (Irganox 1010 by Ciba-Geigy Corp.) and a phosphite-type antioxidant (Ultranox 626 by General Electric Co.). The concentration of antioxidant in the extrudate was about 0.2 parts per hundred (pph) parts polymer.

The extruder was a 90 millimeter (3-1/2 inch) screw type having additional zone of mixing and cooling following the usual sequential zones of feeding, metering, and mixing. The temperatures maintained at the extruder zones were 130°C at the feeding zone, 200°C at the melting zone, 230°C at the metering zone and 210°C at the mixing zone. The extrudate was cooled to approximately 152°C in the cooling zone prior to foaming.

The blowing agents were injected into the same injection port into the extruder barrel between the metering and mixing zones. The blowing agents comprised carbon dioxide ($CO_2$) and water ($H_2O$) in amounts of 1.9 gram moles per kilogram of polymer (mpk) and 0.58 mpk, respectively.

A die having a gap-adjustable, rectangular orifice was situated after the cooling zone. The die width was fixed at 25.4 mm (1 inch). The die gap was readjusted to about 1.85 mm to prevent prefoaming. The die pressure at the critical die gap was 630 pounds per square inch gauge (psig) (4.3 megapascals (MPa)).

A stable, open-cell foam approximately 2.8 centimeters (cm) thick and 9.4 cm wide was produced. As shown in Table I, the foam exhibited excellent dimensional stability. The cell wall thickness is calculated to be about 11 micrometers.

Table I

| Foam Density (kg/$m^3$) (1) | Cell Size (mm) (2) | Open Cell Content (3) | Dimensional Stability | | | |
|---|---|---|---|---|---|---|
| | | | Min. (4) | 1 day (5) | 1 week (5) | 1 month (5) |
| 31 | 0.69 | 64 | 95 | 96 | 105 | 105 |

Notes:

(1) Density of foam body measured in about one month after foam expansion and expressed in kilograms per cubic meter (kg/$m^3$).

(2) Cell size in millimeters per ASTM D3576.

(3) Open cell content in percentage per ASTM D2856-A

(4) Minimum volume of foam body experienced during aging as a percentage of the initial volume determined within 30 seconds after foam expansion. The minimum occurred at 5 min. after extrusion for this foam.

(5) Volume of foam body at the specified time after foam expansion as a percentage of the initial volume.

Example 2

An open-cell propylene copolymer foam in coalesced strand form was prepared according to the process of the present invention.

The apparatus employed was substantially the same as in Example 1 except that the die was replaced with a multi-orifice die. The multi-orifice die had a total of 450 holes of 0.041 inch (1.04 mm) in diameter arranged in a equilateral triangular pattern. The holes were each spaced-apart by 0.25 inch (6.35 mm), and form 15 rows of 30 holes.

The extrudate was of substantially the same composition as that made in Example 1, except that the feed rate of solids (polymer and antioxidant concentrate) to the extruder was lowered to 90.7 kgs/hr (200 lbs/hr). The feed rates of antioxidant concentrate, carbon dioxide, and water were lowered proportionately. The extrudate was cooled to 151°C in the cooling zone prior to foaming.

A stable foam body of coalesced strands with excellent strand-to-strand adhesion was obtained. At a die pressure of 4.1 MPa (600 psig), the foam showed no sign of prefoaming. The foam had an approximately rectangular cross-section of 5.1 cm in thickness and 18.0 cm in width. The foam had a density of 34.0 kg/$m^3$ (2.12 pcf), cell size of 0.48 mm, and open cell content of 82 percent. The thickness of cell walls is calculated to be about 8.3 micrometers.

As shown in Table II, the foam exhibited excellent dimensional stability, and, for its high open cell content, a satisfactorily high compressive strength to render it suitable for cushion packaging and other applications. The foam also recovered well after high compression.

Table II

| Dimensional Stability | | | | Compressive Strength | | |
|---|---|---|---|---|---|---|
| Min. (1) | 1 day | 1 week (2) | 1 month | V | E (3) | H |
| 95 | 97 | 97 | 97 | 51 | 171 | 61 |

Notes:

(1) Same as Table 1.

(2) Same as Table 1.

(3) Compressive strength at 25% deflection in kilopascals per ASTM D3575: V = vertical direction, E = extrusion direction, and H = horizontal direction

Example 3

An open-cell propylene homopolymer foam in coalesced strand form was prepared according to the present invention.

The apparatus employed was substantially the same as in Example 2.

Process conditions were substantially the same except as follows: a 90/10 blend of a Himont HMS polypropylene homopolymer having a melt flow rate of 0.42 and a 93.5/6.5 ethylene/acrylic acid (EAA) copolymer having a melt index (ASTMD 1238 Condition E) of 5.5 was expanded with a $CO_2/H_2O$ blowing agents at 1.5 mpk/0.57 mpk (6.6 pph/1.30 pph), and the solids (polymers and antioxidant concentrate) were fed to the extruder at a rate of 136 kgs/hr (300 lbs/hr). The extrudate was cooled to 162°C in the cooling zone prior to foaming.

A stable foam body of coalesced strands with excellent strand-to-strand adhesion was obtained. At a die pressure of 4.8 MPa (700 psig), the foam showed no sign of prefoaming. The foam had an approximately rectangular cross-section of 6.4 cm in thickness and 19.3 cm in width. The foam had a density of 39.4 kg/m$^3$ (2.46 pcf), cell size of 1.29 mm, and open cell content of 69 percent. The thickness of the cell walls is calculated to be about 26 micrometers.

As shown in Table III, the foam exhibited excellent dimensional stability, and, for its high open cell content, a satisfactorily high compressive strength to render it suitable for cushion packaging and other applications. The foam also recovered well after high compression.

Table III

| Dimensional Stability | | | | Compressive Strength | | |
|---|---|---|---|---|---|---|
| Min. (1) | 1 day | 1 week (2) | 1 month (3) | V | E (3) | H |
| 92 | 94 | 95 | 95 | 46 | 237 | 52 |

Notes:

(1) Same as Table I except that the minimum occurred at 15 min. after extrusion.

(2) Same as Table I

(3) Same as Table II

Example 4

An open-cell propylene copolymer foam was prepared according to the present invention.

The apparatus employed was a 38 mm (1-1/2 inch) screw type extruder of substantially the same configuration as the extruder in Example 1 except as described below. The apparatus had a gap-adjustable die of 6.35 mm (0.25 in) width.

Foams were produced by substantially the same procedure as in Example 1. Himont HMS 2/98 ethylene/propylene (E-P) random copolymer having a melt flow rate of 0.34 (ASTM D1238 Condition L) was employed. The level of antioxidant (Irganox 1010 by Ciba-Geigy Corp.) was adjusted to 0.1 pph. The extruder was adjusted to a solids extrusion rate of 3.7 kgs/hr (8.1 lbs/hr). The temperatures in the extruder were 160°C at feeding zone, 200°C at melting zone, 200°C at metering zone, and 190°C at mixing zone. A blowing agent or blowing agents were selected from carbon dioxide, water and nitrogen as represented in Table IVa. A predetermined amount of each blowing agent was injected separately into the injection port.

The temperature of the cooling zone was varied among the tests as necessary to provide a good foam. The foaming temperature was varied slightly between 152°C and 158°C as necessary. When the foaming temperature was reached, the die gap was readjusted to produce a foam of the largest cross-section possible free from prefoaming. The threshold die gap for prefoaming (called critical die gap hereinafter) was varied from about 0.36 mm to 1.1 mm. The die pressure at the critical die gap ranged from 5.7 MPa (830 psig) to 12.1 MPa (1750 psig).

Foam samples of approximately 12 cm (5 in) in length were examined for processability, dimensional stability, and quality. The results are set forth in Tables IVa and IVb.

In Tests 4.1 through 4.4, 4.7 and 4.8, good foams having low densities, small cells, and satisfactory cross-sectional sizes were obtained using carbon dioxide, carbon dioxide/water, carbon dioxide/water/nitrogen, carbon dioxide/nitrogen, and water/nitrogen as blowing agents. The foams had 20-60 percent open cells, and exhibit excellent dimensional stability.

Table IVa

| Processability and Quality | | | | | | | | | |
|---|---|---|---|---|---|---|---|---|---|
| Test No. | $CO_2$ (1) | $H_2O$ (2) | $N_2$ (3) | Foam Size (4) | Foam Dens. (5) | Cell Size (6) | Wall Thick (7) | Open Cell (8) | Foam Qual. (9) |
| 4.1 | 1.6 | 0 | 0 | 1.4 | 36 | 0.49 | 9 | 57 | G |
| 4.2 | 2.0 | 0 | 0 | 1.2 | 36 | 0.32 | 7 | 60 | SV |
| 4.3 | 1.5 | 0.5 | 0 | 0.9 | 44 | 0.37 | 8 | 40 | G |
| 4.4 | 1.0 | 1.0 | 0 | 1.0 | 44 | 0.27 | 6 | 42 | G |
| 4.5* | 0.8 | 0.8 | 0 | 3.0 | 49 | 1.80 | 45 | 84 | V |
| 4.6* | 0.5 | 1.5 | 0 | 3.4 | 44 | 3.24 | 73 | 61 | H |
| 4.7 | 1.0 | 0.8 | 0.2 | 1.2 | 49 | 0.70 | 18 | 52 | G |
| 4.8 | 1.3 | 0 | 0.3 | 0.6 | 44 | 0.17 | 4 | 20 | G |
| 4.9* | 0 | 2.0 | 0 | 2.7 | 192 | 5.40 | 530 | 55 | C |
| 4.10 | 0 | 2.0 | 0.2 | 1.2 | 57 | 0.77 | 23 | 72 | SC |
| 4.11 | 0 | 1.6 | 0.3 | 0.9 | 48 | 0.31 | 8 | 44 | G |

Notes: *Not an example of this invention

(1), (2) and (3) gram-moles of carbon dioxide, water, and nitrogen mixed in per one kilogram of polymer

(4) Cross-sectional area of foam body in square centimeters

(5) Density of foam body aged for about a month in kilogram per cubic meters

(6) Cell size in millimeters determined per ASTM D3576

(7) Thickness of cell walls in micrometers

(8) Open cell content in percentage determined per ASTM D 2856-A

(9) Quality of foam body;
    G = good foam having uniform cell distribution
    V = foam body contains a number of voids
    SV = foam body contains some voids
    H = foam body contains large holes
    C = foam body severely collapses
    SC = foam body experiences a slight collapse

Table IVb

| Dimensional Stability | | | | |
|---|---|---|---|---|
| Test No. | Minimum (1) | 1 day (2) | 1 week (2) | 1 month (2) |
| 4.1 | 100 | 104 | 102 | 103 |
| 4.8 | 87 | 99 | 101 | 101 |
| 4.11* | 85 | 95 | 98 | 100 |

Notes:

(1) Minimum volume of foam body experienced during aging as a percentage of the initial volume which was determined within 30 seconds after foam expansion. The minimum occurred at 15 min. after extrusion for this foam.

(2) Volume of foam body at the specified time after foam expansion as a percentage of the initial volume.

*For this foam, the stability is expressed by foam volume as a percentage of the volume of one month-old foam body.

Example 5

Open-cell propylene copolymer foams were prepared by steady-state extrusion and by accumulating extrusion according to the present invention.

Substantially the same apparatus and operating procedure of Example 4 were employed. The resin utilized was a Himont HMS 2/98 ethylene/propylene random copolymer having a melt flow rate of 0.53 (ASTM D1238 Condition L). The temperatures maintained in the extruder were 170°C at feeding zone, 230°C at melting zone, 200°C at metering zone and 185°C at mixing zone. Carbon dioxide and mixtures of same with water were employed as the blowing agent.

The temperature of the cooling zone was adjusted among the tests to provide a good foam. The foaming temperature varied between 149 and 150°C. The critical die gap and die pressure ranged from about 0.65 mm to 0.71 mm and from 7.4 MPa (1070 psig) to 8.8 MPa (1270 psig).

In addition to data and samples taken at the critical die gap, larger samples of the same formulation were produced by an accumulating extrusion scheme using the adjustable die orifice (hereinafter referred to as pseudo-accumulating extrusion).

A pseudo-accumulating extrusion scheme was also utilized. After a steady extrusion sample was taken, the die orifice was closed to accumulate the foamable melt in the extrusion line until the die pressure increased by about 3.5 MPa (500 psi) and then the die was quickly opened to about 1.8-2.0 mm gap allowing the extrudate melt to exit the die and foam. The instantaneous extrusion rate was 8-9 kgs/hr (17-20 lbs/hr), about twice as high as the steady state extrusion rate. The pseudo-accumulating scheme simulates a high rate of steady extrusion. The pseudo-accumulating scheme produced good, lower-density foam strands free from corrugation. A fine-celled low-density foam often suffers corrugation of the foam body in the transverse direction when the extrusion rate is not sufficiently high. The foam samples produced by the pseudo-accumulating extrusion were used to determine dimensional stability. The processability, quality, and dimensional stability of the foams produced in this Example are set forth in Table Va and Vb, respectively.

The results of the tests demonstrate that relatively thin walls yield better quality foams, which are made at a higher level of carbon dioxide. A higher level of blowing agent not only provides a lower foam density but makes the cell size smaller. The foams produced in Tests 5.4a and 5.4b, with cell walls thicker than 35 microns, have large holes at the center. The foams made in Tests 5.2 and 5.2b have 30-31 micron cell walls and are marginally acceptable with some voids. Other foams having cell walls thinner than 10 microns are good in integrity with a uniform distribution of cell sizes. Two foams tested exhibit satisfactory dimensional stability. It was noted that the higher density foam made in Test 5.3b exhibits better dimensional stability than the slightly lower density foam made in Test 5.lb.

Table Va

| Processability and Quality | | | | | | | | |
|---|---|---|---|---|---|---|---|---|
| Test No. (1) | $CO_2$ (2) | $H_2O$ (3) | Foam Size (4) | Foam Dens. (5) | Cell Size (6) | Wall Thick (7) | Open Cell (8) | Foam Qual. (9) |
| 5.1a | 1.5 | 0.5 | 1.0 | 36 | 0.39 | 7 | 26 | G |
| 5.1b | | | 1.2 | 31 | 0.29 | 5 | 27 | G |
| 5.2a | 1.0 | 0.5 | 1.5 | 41 | 1.47 | 31 | 74 | SV |
| 5.2b | | | 2.1 | 38 | 1.55 | 30 | 71 | SV |
| 5.3a | 1.6 | 0 | 0.9 | 44 | 0.30 | 7 | 33 | G |
| 5.3b | | | 2.1 | 33 | 0.30 | 5 | 21 | G |

Notes:

*Not an example of this invention

(1) Test a's represent a steady state extrusion and b's a pseudo-accumulating extrusion.

(2) and (3) G-moles of carbon dioxide and water mixed in per one kilogram of polymer

(4) Cross-sectional area of foam body in square centimeters

(5) Density of foam body aged for about a month in kilogram per cubic meters

(6) Cell size in millimeters determined per ASTM D3576

(7) Thickness of cell walls in micrometers

(8) Open cell content in percentage determined per ASTM D 2856-A

(9) Quality of foam body;

     G = good foam having uniform cell distribution V = foam body contains a number of voids SV = foam body contains some voids H = foam body contains large holes

Table Va   (continued)

| Test No. (1) | $CO_2$ (2) | $H_2O$ (3) | Foam Size (4) | Foam Dens. (5) | Cell Size (6) | Wall Thick (7) | Open Cell (8) | Foam Qual. (9) |
|---|---|---|---|---|---|---|---|---|
| 5.4a* | 1.3 | 0 | 1.1 | 65 | 1.08 | 36 | 76 | H |
| 5.4b* | | | 2.1 | 71 | 1.01 | 37 | 52 | H |

Notes:

*Not an example of this invention

(1) Test a's represent a steady state extrusion and b's a pseudo-accumulating extrusion.

(2) and (3) G-moles of carbon dioxide and water mixed in per one kilogram of polymer

(4) Cross-sectional area of foam body in square centimeters

(5) Density of foam body aged for about a month in kilogram per cubic meters

(6) Cell size in millimeters determined per ASTM D3576

(7) Thickness of cell walls in micrometers

(8) Open cell content in percentage determined per ASTM D 2856-A

(9) Quality of foam body;

 G = good foam having uniform cell distribution V = foam body contains a number of voids SV = foam body contains some voids H = foam body contains large holes

Table Vb

| Test No. | Minimum (1) | 1 day (2) | 1 week (2) | 1 month (2) |
|---|---|---|---|---|
| | | Dimensional Stability | | |
| 5.1b | 76 | 88 | 93 | 95 |
| 5.3b | 100 | 106 | 107 | 106 |

Notes:

(1) Minimum volume of foam body experienced during aging as a percentage of the initial volume which was determined within 30 seconds after foam expansion. The minimum occurred at 15 min. after extrusion for this foam.

(2) Volume of foam body at the specified time after foam expansion as a percentage of the initial volume.

## Example 6

Open-cell propylene copolymer foams were prepared using a nucleating agent according to the present invention.

Substantially the same apparatus and operating procedure of Example 4 were employed. A higher melt flow rate (MFR) resin was foamed with relatively small amount of carbon dioxide blowing agent and a cell nucleating agent. The resin employed was a Himont HMS 2/98 ethylene/propylene random copolymer having a MFR of 7.0 (ASTM D1238 Condition L). The cell nucleating agent was Hydrocerol CF-70 (Boehringer Ingelheim KG). Hydrocerol CF-70 is a sodium carbonate/citric acid-type nucleating agent. A small amount (0.1 pph) Irganox 1010 antioxidant was incorporated.

The granular polypropylene resin was mixed with the antioxidant concentrate and 0.2 pph of nucleator pellets and extruded at a uniform rate of 4.7 kgs/hr (10.4 lbs/hr). The temperatures maintained in the extruder were 190°C at feeding zone, 220°C at melting zone, 210°C at metering zone, and 180°C at mixing zone. Carbon dioxide was injected into the blowing agent injection port at a predetermined uniform rate. The temperature of the cooling zone was adjusted in each test to provide a good foam. The foaming temperature of the formulations was 138-139°C. The critical die gap and die pressure for the formulations in this example ranged from about 0.25 mm to 0.30 mm and from 9.7 MPa (1410 psig) to 9.9 MPa (1430 psig).

As shown in Table VI, good foams having relatively high densities and uniformly small cell sizes were obtained using 0.6-0.9 mpk (2.6-4.0 pph) carbon dioxide. The good processability of the foams may in part be due to their relatively thin cell walls of 11-15 micrometer. Even though the foams had relatively low open cell contents, the foams were not observed to suffer unsatisfactory shrinkage during aging (not actually measured). The high compressive strengths of the high density foams are believed to have aided in the dimensional stability of those foams.

Table VI

| Processability and Quality | | | | | | | |
|---|---|---|---|---|---|---|---|
| Test No. | CO$_2$ (1) | Foam Size (2) | Foam Dens. (3) | Cell Size (4) | Wall Thick (5) | Open Cell (6) | Foam Qual. (7) |
| 6.1 | 0.9 | 0.6 | 53 | 0.44 | 12 | 17 | G |
| 6.2 | 0.8 | 0.6 | 59 | 0.36 | 11 | 7 | G |
| 6.3 | 0.6 | 0.5 | 70 | 0.42 | 15 | 16 | G |

Notes:

*Not an example of this invention (1) gram-moles of carbon dioxide mixed in per one kilogram of polymer

(2) Cross-sectional area of foam body in square centimeters

(3) Density of foam body aged for about a month in kilogram per cubic meters

(4) Cell size in millimeters determined per ASTM D3576

(5) Thickness of cell walls in micrometers

(6) Open cell content in percentage determined per ASTM D 2856-A

(7) Quality of foam body;
      G = good foam having uniform cell distribution

Example 7

Open-cell propylene copolymer foams with some ethylenic polymer content were prepared according to the present invention.

The apparatus and its operating procedure used in this example were substantially the same as in Example 5. The PP copolymer resin of Example 5 was blended with 10-20 percent of various ethylenic polymer resins and foamed with carbon dioxide or its mixture with water.

The ethylenic resins evaluated included Primacore 1410 ethylene/acrylic acid (EAA) copolymer (9 percent AA, 1.5 melt index) of The Dow Chemical Co., PE 682 low density polyethylene (LDPE) (0.7 melt index) of The Dow Chemical Co., and Surlyn 1706 brand ionomer (Ionomer) by E.I. DuPont de Nemours & Co. A small amount (0.1 pph) Irganox 1010 antioxidant was incorporated in the polymers.

The granular PP copolymer resin and a predetermined amount of a selected ethylenic resin were dry-blended with the antioxidant concentrate. The solid was extruded at a uniform rate of 3.7 kgs/hr (8.1 lbs/hr). The extruder zone temperatures were the same as in Example 5. The temperature of the cooling zone was adjusted in each of the tests of this example to provide a good foam. The foaming temperature of the formulations was 147-149°C. Foams were made by conventional steady extrusion and pseudo-accumulating extrusion. The critical die gap and die pressures ranged from about 0.69 mm to 0.71 mm and from 8.6 MPa (1250 psig) to 9.1 MPa (1320 psig).

The processability, quality, and dimensional stability data is set forth in Tables VIIa and VIIb. All blends of the PP resin and ethylenic polymer yielded good quality foams having fine cells and low densities. The cell walls of the test foams are all thinner than 24 microns. It was surprising that polypropylene can accommodate as much as 20 percent of those ethylenic copolymers in expanding good low-density foams. Except for the foam made in Test 7.4b, the foams displayed satisfactory dimensional stability with open cell content greater than 30 percent. The PP/ionomer blend foam made in Test 7.4b exhibited marginal dimensional stability with excessive shrinkage (more than 50 percent) and slow recovery. Desirable foams recover at least 80 percent of its original volume within about a month. The low density foam of low open cell content was marginal in dimensional stability.

Table VIIa

| Test No. | Blend Resin | | CO$_2$ | H$_2$O | Foam Size | Foam Dens. | Cell Size | Wall Thick | Open Cell | Foam Qual. |
|---|---|---|---|---|---|---|---|---|---|---|
| | Type | level | | | | | | | | |
| (1) | (2) | (3) | (4) | (5) | (6) | (7) | (8) | (9) | (10) | (11) |
| 7.1a | EAA | 10 | 1.7 | 0 | 1.3 | 30 | 0.54 | 8 | 31 | G |
| 7.1b | | | | | 2.9 | 31 | 0.52 | 8 | 34 | G |
| 7.2a | EAA | 10 | 1.5 | 0.5 | 1.7 | 33 | 0.68 | 11 | 59 | G |
| 7.2b | | | | | 5.0 | 30 | 0.62 | 10 | 50 | G |
| 7.3a | LDPE | 20 | 1.5 | 0.5 | 1.1 | 37 | 0.34 | 6 | 39 | G |
| 7.3b | | | | | 1.6 | 38 | 0.51 | 10 | 34 | G |
| 7.4a | IONOMER | 10 | 1.5 | 0.5 | ND | ND | ND | ND | ND | G |
| 7.4b | | | | | 4.6 | 29 | 0.52 | 8 | 10 | G |

Notes: ND = Not determined (1) Test a's represent a steady state extrusion and b's a pseudo-accumulating extrusion

(2) The type of ethylenic polymer blended in with the PP copolymer:
   EAA = ethylene acrylic acid copolymer (9 percent AA, 1.5 melt index), Primacore 1410 resin by Dow Chemical Co.
   LDPE = Dow low density polyethylene 682 (0.7 melt index)
   Ionomer = Surlyn 1706 grade ionomer made by DuPont de Nemours & Co.

(3) The percentage of the ethylenic polymer blended in the total polymer

(4) and (5) G-moles of carbon dioxide and water mixed in per one kilogram of polymer

(6) Cross-sectional area of foam body in square centimeters

(7) Density of foam body aged for about a month in kilogram per cubic meters

(8) Cell size in millimeters determined per ASTM D3576

(9) Thickness of cell walls in micrometers (10) Open cell content in percentage determined per ASTM D2856-A

(11) Quality of foam body;
   G = good foam having uniform cell distribution

Table VIIb

| | Dimensional Stability | | | |
|---|---|---|---|---|
| Test No. | Minimum (1) | 1 day (2) | 1 week (2) | 1 month (2) |
| 7.1b | 91 | 95 | 98 | 99 |
| 7.2b | 93 | 95 | 98 | 98 |
| 7.3b | 82 | 89 | 82 | 82 |
| 7.4b | 49 | 49 | 67 | 78 |

Notes:
(1) See Table Vb.
(2) See Table Vb.

Example 8

Open-cell propylene copolymer foams were prepared according to the present invention.

The apparatus employed was a 25 mm (1 inch) screw type extruder of substantially the same configuration as that of Example 4. The adjustable die gap was 3.68 mm (0.145 inch) in width.

The operating procedure was substantially the same as in Example 4. The same E-P copolymer of Example 4 was dry-blended with EAA resin or Ionomer resin, and 0.1 pph Irganox 1010, and fed to the extruder at a rate of 1.8 kgs/hr (4 lbs/hr). A binary blowing agent consisting of 0.8 mpk $CO_2$ and 0.8 mpk $H_2O$ was injected into the extruder barrel. The temperatures maintained at the extruder zones were 160°C at feeding zone, 180°C at melting zone, 210°C at metering zone and 230°C at mixing zone. Carbon dioxide and water were separately injected into the injection port each at a rate to be 0.8 mpk. The temperature of the cooling zone was adjusted in each test to provide a good foam. The foaming temperatures of the formulations evaluated in this example ranged from 1.65°C to 168°C. The critical die gaps and the critical die pressure were in the range of 0.36-0.51 mm (14-20 mils) and 4.5-7.9 MPa (650-1150 psig), respectively.

The processability, quality, and dimensional stability of the foams are set forth in Tables VIIIa and VIIIb. Both the E-P copolymer and its blends provided satisfactory foams having low foam densities and acceptable dimensional stabilities. While the foams having cell walls of 10 micron thickness were of excellent quality, those having 21-22 micron-thick cell walls were marginally satisfactory in quality. Tests 8.1, 8.2 and 8.3 indicate that addition of a small amount of EAA resin aids in foam expansion of the E-P copolymer with the relatively large amount of water blowing agent. The EAA resin may enhance solubility of water in the polymer melt.

Table VIIIa

| Processability and Quality | | | | | | | | | | |
|---|---|---|---|---|---|---|---|---|---|---|
| Test No. | Blend | Resin | $CO_2$ | $H_2O$ | Foam Size | Foam Dens. | Cell Size | Wall Thick | Open Cell | Foam Qual. |
| | Type level | | | | | | | | | |
| | (1) | (2) | (3) | (4) | (5) | (6) | (7) | (8) | (9) | (10) |
| 8.1 | - | - | 0.8 | 0.8 | 0.7 | 44 | 0.95 | 21 | 81 | D |
| 8.2 | EAA | 5 | 0.8 | 0.8 | 0.7 | 40 | 0.51 | 10 | 21 | G |
| 8.3 | EAA | 10 | 0.8 | 0.8 | 1.0 | 35 | 1.25 | 22 | 83 | SD |
| 8.4 | Ionomer | 5 | 0.8 | 0.8 | 0.6 | 41 | 0.49 | 10 | 32 | G |

Notes:

(1) The type of ethylenic polymer blended in with the PP copolymer

(2) The percentage of the ethylenic polymer blended in the total polymer

(3) and (4) G-moles of carbon dioxide and water mixed in per one kilogram of polymer

(5) Cross-sectional area of foam body in square centimeters

(6) Density of foam body aged for about a month in kilogram per cubic meters

(7) Cell size in millimeters determined per ASTM D3576

(8) Thickness of cell walls in micrometers

(9) Open cell content in percentage determined per ASTM D2856-A

(10) Quality of foam body;
  G = good foam having uniform cell distribution
  D = distribution of cell size
  SD = slight distribution of cell size

Table VIIIb

| Dimensional Stability | | | | |
|---|---|---|---|---|
| Test No. | Minimum (1) | 1 day (2) | 1 week (2) | 1 month (2) |
| 8.1 | 92 | 92 | 93 | 93 |
| 8.2 | 67 | 83 | 93 | 108 |
| 8.3 | 102 | 103 | 102 | 103 |
| 8.4 | (not determined) | | | |

Notes:
(1) See Table Vb
(2) See Table Vb

Example 9

Open-cell propylene copolymer foams were prepared by an accumulating extrusion system according to the present invention.

The apparatus consisted of the 38 mm (1-1/2 inch) foam extruder of Example 4, an accumulating extrusion system (AES) attached at the end of the cooling zone of the extruder, and a gap-adjustable die having an opening of 6.35 mm (0.25 in) width attached therewith. The foamable melt is accumulated in the accumulating chamber of 330 cubic centimeter capacity and then rapidly pushed out of the orifice by nitrogen pressure.

In this example, a 90/10 blend by weight of a 2/98 E-P copolymer (0.52 MFR) and Primacore® 1410 EAA copolymer was expanded with a binary blowing agent consisting of 1.5 mpk carbon dioxide and 0.5 mpk water. The solids were pre-blended, and extruded at a rate of 3.7 kgs/hr (8.1 lbs/hr). The temperatures in the extruder were 170°C at feeding zone, 200°C at melting zone, 220°C at metering zone, and 180°C at mixing zone. Carbon dioxide and water were separately injected into the injection port at a rate to be 1.5 and 0.5 mpk, respectively. The temperature of the cooling zone was adjusted to provide a good foam. The foaming temperature of the formulation was approximately 150°C. The critical die gap and die pressure were 0.8 mm and 8.0 MPa (1160 psig), respectively.

As shown in Table IXa, a good foam having fine cell size was obtained by steady extrusion. The foam strand produced had some corrugation in the transverse direction.

The AES scheme was employed to produce larger foam than possible with steady extrusion. The temperatures of the accumulator and the transfer lines were maintained so that the foamable melt coming out of the extruder could be neither excessively cooled nor heated. The AES was operated as follows. First, the chamber was pressurized with nitrogen to about 4.9 MPa (700 psig), which was to exert back pressure for the incoming melt. Then, the extruder output was diverted into the accumulator. The accumulation lasted for approximately 3.5 minutes. The gas pressure increased and exceeded 8.3 MPa (1200 psig) as it was compressed by the incoming melt. During the accumulating operation, the die gap was opened to 3.1 mm (120 mils), and the nitrogen source pressure was adjusted to 9.0 MPa (1300 psig). Upon completion of accumulation, the accumulated melt was allowed to shoot out of the die orifice.

An excellent-quality foam free from corrugation was achieved. Several such shots were made to produce foams for property evaluation. The instantaneous extrusion rates, estimated from the weights of the extrudates and the shoot-out times, were ranged from 90 to 120 kgs/hr. The foams were observed to be dimensionally stable.

The foam plank produced by the AES scheme was aged for a month, and tested for its physical properties. The data is summarized in Table IXb. After the skins were taken off, the density of the AES foam was 24 kg/m$^3$ (1.5 pcf), much lower than that with skin on (refer to Table IXa). The low-density foam having over 60 percent open cells displays strength, resiliency, and shock-mitigating property suitable for cushion packaging of relatively light weight items.

Table IXa

| Test No. | Blend Resin | | $CO_2$ | $H_2O$ | Foam Size | Foam Dens. | Cell Size | Wall Thick | Open Cell | Foam Qual. |
|---|---|---|---|---|---|---|---|---|---|---|
| | Type | level | | | | | | | | |
| | (1) | (2) | (3) | (4) | (5) | (6) | (7) | (8) | (9) | (10) |
| 9.1a | EAA | 10 | 1.5 | 0.5 | 1.6 | 39 | 0.58 | 12 | 36 | G |
| 9.1b | | | | | 8.9 | 30 | 0.62 | 10 | 67 | G |

Processability and Quality

Notes:

(1) Type of resin employed

(2) The percentage of the EAA copolymer blended in the total polymer

(3) and (4) gram-moles of carbon dioxide and water mixed in per one kilogram of polymer

(5) Cross-sectional area of foam body in square centimeters

(6) Density of foam body aged for about a month in kilogram per cubic meters

(7) Cell size in millimeters determined per ASTM D3576

(8) Thickness of cell walls in micrometers

(9) Open cell content in percentage determined per ASTM D2856-A

(10) Quality of foam body;    G = good foam having uniform cell distribution

Table IXb

| Property | Unit | Method | Condition | Value |
|---|---|---|---|---|
| Compressive Strength | kPa | ASTM D3575B | @ 10% defl. | 38 |
| | | | 25% defl. | 47 |
| | | | 50% defl. | 65 |

Properties

Table IXb   (continued)

| Properties | | | | |
|---|---|---|---|---|
| Property | Unit | Method | Condition | Value |
| Compressive Recovery | percent | Dow (1) | after 1 hr | 86 |
| | | | after 6 days | 93 |
| Dynamic Cushioning | x g | Dow (2) | @ static stress (kPa) | |
| | | | 1.8 | 77 |
| | | | 3.5 | 70 |
| | | | 5.2 | 75 |
| | | | 8.6 | 104 |
| Recovery After D.C. | percent | Dow (3) | @ static stress (kPa) | |
| | | | 1.8 | 95 |
| | | | 3.5 | 98 |
| | | | 5.2 | 98 |
| | | | 8.6 | 97 |

Notes: *All properties are for the vertical direction (1) Thickness of the specimen in percentage of the initial six days after it was compressed to 80 percent of the initial at rate of 1.27 cm/min (0.5 inch/min.)

(2) Average of peak deceleration during second to fifth drops in g's at the given static stress. The test specimens had 38 mm (1.5 inches) thickness and 50 mm x 50 mm (2 inches x 2 inches) impact area. The drop height of the weights was 61 cm (24 inches).

(3) Thickness of the specimen in percentage of the initial six days after is was tested for the dynamic cushioning property.

## Claims

1. A process for making a dimensionally-stable. extruded propylene polymer foam having a density of from 10 to 150 kilograms per cubic meter the process comprising:

   a) heating a propylene polymer material comprising greater than 50 percent by weight propylene monomeric units to form a melt polymer material;

   b) incorporating into the melt polymer material a blowing agent containing at least 15 percent by weight of one or more inorganic blowing agents to form a foamable gel;

   c) cooling the foamable gel to an optimum foaming temperature; and

   d) extruding the foamable gel through a die to form the foam, in the form of a plank and having an average cell wall thickness of less than 35 micrometers.

2. The process of Claim 1, wherein the blowing agent contains carbon dioxide.

3. The process of Claim 1, wherein the blowing agent contains carbon dioxide and water.

4. The process of Claim 1, wherein the blowing agent contains nitrogen and water.

5. The process of any of Claims 1 through 4, wherein the blowing agent incorporated into the melt polymer material comprises at least 50 weight percent by weight of one or more inorganic blowing agents.

6. The process of any of Claims 1 through 4, wherein the blowing agent incorporated into the melt polymer material is at least 95 weight percent by weight of one or more inorganic blowing agents based on the total weight of the blowing agent.

7. The process of any of Claims 1 through 4, wherein the blowing agent incorporated into the melt polymer material is entirely of one or more inorganic blowing agents.

8. The process of any of Claims 1 through 4, wherein the blowing agent is incorporated into the melt polymer material at a concentration of from 0.2 to 5.0 moles per kilogram of melt polymer material.

9. A foam in the form of a plank and obtainable from the process of any of Claims 1 through 8.

10. A foam according to claim 9 and having a cross-sectional area of at least 10cm$^2$.

11. The foam of Claim 9 or 10, wherein the foam is closed cell.

12. The foam of Claim 9 or 10, wherein the foam has an open cell content of from 20 to 70 percent.

13. The foam of any of the preceding claims 9-12, wherein the average cell wall thickness is less than 15 micrometers.

14. The foam of any of the preceding claims 9-13, wherein the foam has an average cell size of from 0.1 to 5 millimeters.

15. The foam of any of the preceding claims 9-14, wherein the propylene polymer material is at least 80 percent by weight of propylene monomeric units.

16. The foam of any of the preceding claims 9-15, wherein the foam is in coalesced strand form.

## Patentansprüche

1. Verfahren zur Herstellung eines formstabilen extrudierten Polypropylenschaumstoffes mit einer Dichte von 10 bis 150 Kilogramm pro Kubikmeter, wobei das Verfahren umfaßt:

   a) Erhitzen eines Propylenpolymermaterials, welches mehr als 50 Gew.-% Propylenmonomereneinheiten umfaßt, zur Bildung eines geschmolzenen Polymermaterials;
   b) Eingeben in das geschmolzene Polymermaterial eines Blähmittels, das wenigstens 15 Gew.-% von einem oder mehreren anorganischen Blähmitteln enthält, zur Bildung eines schäumbaren Gels;
   c) Abkühlen des schäumbaren Gels auf eine optimale Schäumungstemperatur; und
   d) Extrudieren des schäumbaren Gels durch eine Düse zur Bildung des Schaums in Form einer Platte, welcher eine durchschnittliche Zellwanddicke von weniger als 35 Mikrometer (μm) hat.

2. Verfahren nach Anspruch 1, worin das Blähmittel Kohlendioxid enthält.

3. Verfahren nach Anspruch 1, worin das Blähmittel Kohlendioxid und Wasser enthält.

4. Verfahren nach Anspruch 1, worin das Blähmittel Stickstoff und Wasser enthält.

5. Verfahren nach einem der Ansprüche 1 bis 4, worin das in das geschmolzene Polymermaterial eingegebene Blähmittel wenigstens 50 Gew.-% von einem oder mehreren anorganischen Blähmitteln umfaßt.

6. Verfahren nach einem der Ansprüche 1 bis 4, worin das in das geschmolzene Polymermaterial eingegebene Blähmittel wenigstens 95 Gew.-% von einem oder mehreren anorganischen Blähmitteln, bezogen auf das Gesamtgewicht des Blähmittels, ist.

7. Verfahren nach einem der Ansprüche 1 bis 4, worin das in das geschmolzene Polymermaterial eingegebene Blähmittel vollständig aus einem oder mehreren anorganischen Blähmitteln besteht.

8. Verfahren nach einem der Ansprüche 1 bis 4, worin das Blähmittel in das geschmolzene Polymermaterial mit einer Konzentration von 0,2 bis 5,0 Mol pro Kilogramm des geschmolzenen Polymermaterials eingegeben wird.

9. Schaum in Form einer Platte, erhältlich aus dem Verfahren nach einem der Ansprüche 1 bis 8.

**10.** Schaum nach Anspruch 9 mit einer Querschnittsfläche von wenigstens 10 cm$^2$.

**11.** Schaum nach Anspruch 9 oder 10, wobei der Schaum geschlossenzellig ist.

**12.** Schaum nach Anspruch 9 oder 10, wobei der Schaum einen Gehalt an offenen Zellen 20 bis 70 % besitzt.

**13.** Schaum nach einem der vorhergehenden Ansprüche 9 - 12, bei welchem die durchschnittliche Zellwanddicke weniger als 15 Mikrometer (μm) ist.

**14.** Schaum nach einem der vorhergehenden Ansprüche 9 - 13, bei welchem der Schaum eine durchschnittliche Zellgröße von 0,1 bis 5 Millimeter hat.

**15.** Schaum nach einem der vorhergehenden Ansprüche 9 - 14, bei welchem das Propylenpolymermaterial zu wenigstens 80 Gew.-% aus Propylenmonomereneinheiten besteht.

**16.** Schaum nach einem der vorhergehenden Ansprüche 9 - 15, bei welchem der Schaum in koaleszierter Strangform vorliegt.

## Revendications

**1.** Procédé permettant de fabriquer une mousse de polymère de propylène extrudée, présentant une certaine stabilité dimensionnelle et une masse volumique de 10 à 150 kg/m$^3$, ce procédé comportant :

    a) le fait de chauffer un matériau polymère de propylène, qui contient plus de 50 % en poids de motifs de monomère propylène, afin de former une masse fondue de polymère ;
    b) le fait d'incorporer, dans cette masse fondue de polymère, un agent d'expansion contenant au moins 15 % en poids d'un ou de plusieurs agents d'expansion inorganiques, afin de former un gel moussable ;
    c) le fait de faire refroidir ce gel moussable jusqu'à une température optimale de moussage ; et
    d) le fait d'extruder ce gel moussable en le faisant passer à travers une filière afin de former une mousse, qui prend la forme d'un panneau et dans laquelle l'épaisseur moyenne des parois des cellules est inférieure à 35 micromètres.

**2.** Procédé conforme à la revendication 1, dans lequel l'agent d'expansion contient du dioxyde de carbone.

**3.** Procédé conforme à la revendication 1, dans lequel l'agent d'expansion contient du dioxyde de carbone et de l'eau.

**4.** Procédé conforme à la revendication 1, dans lequel l'agent d'expansion contient de l'azote et de l'eau.

**5.** Procédé conforme à l'une des revendications 1 à 4, dans lequel l'agent d'expansion incorporé dans la masse de polymère fondu comporte au moins 50 % en poids d'un ou de plusieurs agents d'expansion inorganiques.

**6.** Procédé conforme à l'une des revendications 1 à 4, dans lequel l'agent d'expansion incorporé dans la masse de polymère fondu comprend au moins 95 % en poids, par rapport au poids total de l'agent d'expansion, d'un ou de plusieurs agents d'expansion inorganiques.

**7.** Procédé conforme à l'une des revendications 1 à 4, dans lequel l'agent d'expansion incorporé dans la masse de polymère fondu est entièrement constitué d'un ou de plusieurs agents d'expansion inorganiques.

**8.** Procédé conforme à l'une des revendications 1 à 4, dans lequel l'agent d'expansion est incorporé dans la masse de polymère fondu en une concentration de 0,2 à 5,0 moles par kilogramme de polymère fondu.

**9.** Mousse se présentant sous la forme d'un panneau, que l'on peut obtenir selon un procédé conforme à l'une des revendications 1 à 8.

**10.** Mousse conforme à la revendication 9, dont la section transversale présente une aire d'au moins 10 cm$^2$.

**11.** Mousse conforme à la revendication 9 ou 10, qui est une mousse à cellules fermées.

12. Mousse conforme à la revendication 9 ou 10, qui est une mousse dans laquelle il y a de 20 à 70 % de cellules ouvertes.

13. Mousse conforme à l'une des revendications 9 à 12, dans laquelle l'épaisseur moyenne des parois des cellules vaut moins de 15 μm.

14. Mousse conforme à l'une des revendications 9 à 13, dans laquelle la taille moyenne des cellules vaut de 0,1 à 5 mm.

15. Mousse conforme à l'une des revendications 9 à 14, dans laquelle le matériau polymère de propylène comporte au moins 80 % en poids de motifs monomères dérivés du propylène.

16. Mousse conforme à l'une des revendications 9 à 15, laquelle mousse se présente sous la forme de brins réunis par coalescence.